# EUROPÄISCHE PATENTSCHRIFT

(11) **EP 3 246 238 B1**
(45) Veröffentlichungstag und Bekanntmachung des Hinweises auf die Patenterteilung: **06.10.2021**
(21) Anmeldenummer: 17157194.6
(22) Anmeldetag: 21.02.2017
(51) Int. Cl.: B62K 25/02

(54) **SCHNELLSPANNVORRICHTUNG**
QUICK TENSIONING DEVICE
DISPOSITIF DE SERRAGE RAPIDE

(30) Priorität: 22.02.2016 DE 102016103080
(43) Veröffentlichungstag der Anmeldung: 22.11.2017
(73) Patentinhaber: DT Swiss AG, 2504 Biel (CH)
(72) Erfinder: Meier, Matthias, CH-2560 Nidau (CH); Spahr, Stefan, CH-2543 Lengnau (CH); Walthert, Martin, CH-3270 Aarberg (CH)
(74) Vertreter: BSB Patentanwälte Schütte & Engelen Partnerschaft mbB

(56) Entgegenhaltungen:
- WO-A2-2008/145496
- DE-A1-102013 013 819
- DE-U1- 29 714 945
- TW-A- 201 540 595
- US-A- 4 598 614
- US-A1- 2008 116 658

## Beschreibung

Die vorliegende Erfindung betrifft eine Schnellspannvorrichtung, insbesondere für wenigstens teilweise und vorzugsweise überwiegend muskelbetriebene Zweiräder wie Fahrräder.

Im Stand der Technik sind verschiedenste Schnellspannvorrichtungen zum Befestigen der Laufräder von Fahrrädern bekannt geworden. Zur lösbaren Befestigung der Laufräder von Rennrädern werden beispielsweise Schnellspannvorrichtungen verwendet, bei denen die erforderlichen Klemmkräfte durch Umlegen des Schnellspannhebels bewirkt werden. Doch insbesondere bei Mountainbikes und auch anderen Fahrrädern hat es sich gezeigt, dass die durch die derart aufgebrachte Haltekraft erzeugte Steifigkeit noch verbessert werden kann.

Mit der EP 1 801 005 B1 ist ein Schnellspanner für Fahrräder bekannt geworden, bei dem die Spannkraft nicht durch das Umlegen des Schnellspannhebels erzeugt wird, sondern unabhängig davon ist. Der Schnellspannhebel ist mit einem Schraubgewinde verbunden, sodass die gewünschte Spannkraft durch die Anzahl der Umdrehungen des Schnellspannhebels aufgebracht wird. Um den Schnellspannhebel in die gewünschte Ruhelage zu bringen, kann der Schnellspannhebel axial nach außen gezogen und in eine gewünschte Ruheposition frei gedreht werden. Diese Schnellspannvorrichtung funktioniert zuverlässig und ermöglicht eine einfache Bedienung. Nachteilig sind der relativ hohe Aufwand für die Mechanik der Schnellspannvorrichtung und das relativ hohe Gewicht.

Im Markt bekannt geworden ist ein Schnellspanner, der auch in der italienischen Patentanmeldung IT FI 2010 0089 A1 mit der Nummer 140057 beschrieben ist. Dieser Schnellspanner wirkt mit einer Steckachse zusammen. Die Steckachse weist ein Gewinde an einem Ende der Steckachse und an dem anderen Ende eine Einstecköffnung für einen separaten Schnellspannhebel auf. Zu Montagezwecken wird das Einsteckende des Schnellspannhebels in die Einstecköffnung der Steckachse eingeführt, wobei ein Außensechskant des Einsteckendes des Schnellspannhebels mit einem entsprechenden Innensechskant der Steckachse in Eingriff gerät. Durch Drehen des Schnellspannhebels wird so auch die nun formschlüssig verbundene Steckachse gedreht, sodass sich mit einer entsprechenden Anzahl von Drehbewegungen des Schnellspannhebels die gewünschte Haltekraft des Laufrades ergibt. Da für das Vorderrad und das Hinterrad insgesamt nur ein Schnellspannhebel zur Verfügung gestellt werden muss, kann so schon die Hälfte des Gewichts eingespart werden. Zudem kann ein solcher Schnellspanner insgesamt leichter ausgestaltet werden als ein Schnellspanner nach der EP 1 801 005 B1.

Das Einsteckende des Schnellspannhebels nach der IT FI 2010 0089 A1 weist eine solche Länge auf, dass der Schnellspannhebel bei der Montage oder Demontage ein Stück weit aus der Steckachse herausgezogen werden kann, während der Außensechskant noch einen ausreichenden Eingriff mit dem Innensechskant der Steckachse behält. Dadurch besteht bei einer vollständigen Umdrehung des Schnellspannhebels keine Klemmgefahr für die Finger der Bedienperson zwischen dem Rahmen des Fahrrades und dem Schnellspannhebel. Nach Erreichen der gewünschten Klemmspannung wird der Schnellspannhebel wieder eingeschoben. Der Schnellspannhebel kann aber auch kurz aus der Steckachse herausgezogen und in eine bevorzugte Winkelposition gedreht und dann wieder eingesteckt werden. Es wird eine einfache Bedienung mit einem geringen Gesamtgewicht ermöglicht. Das in die Steckachse eingeführte Einsteckteil muss aber aus einem festen Material bestehen und eine solche Länge aufweisen, dass auch bei teilweisem Herausziehen eine genügende Kontaktfläche zur Steckachse verbleibt, ohne die erforderlichen Klemmkräfte aufzubringen. Dadurch ist das Gesamtgewicht des Schnellspanners höher, als es eigentlich sein müsste, ohne weitere Funktionalität zur Verfügung zu stellen.

Die US 4 598 614 A offenbart einen Handhebel mit einem Befestigungsmechanismus für eine Achse oder eine Spindel. Der Handhebel ist drehbar ausgeführt. Der Handhebel aus der US 4 598 614 A weist einen Spannmechanismus auf, der dem Spannmechanismus in der Präambel des Anspruchs 1 ähnelt.

TW 201 540 595 A offenbart einen winkelmäßig adaptierbaren Drückknopf mit Schnellverschluss für Fahrräder. Ein Schnellverschlussgriff wird durch steht über ein bewegliches Verbindungselement mit der Achse im Eingriff.

Es ist deshalb die Aufgabe der vorliegenden Erfindung, eine Schnellspannvorrichtung zur Verfügung zu stellen, welche ein noch geringeres Gesamtgewicht und/oder eine einfachere Bedienung ermöglicht.

Diese Aufgabe wird gelöst durch eine Schnellspannvorrichtung mit den Merkmalen des Anspruchs 1, und durch ein Zweirad mit den Merkmalen des Anspruchs 12. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Schnellspannvorrichtung ist insbesondere für wenigstens teilweise und vorzugsweise überwiegend muskelbetriebene Zweiräder wie Fahrräder vorgesehen und umfasst eine Achseinheit und eine Spanneinrichtung. Die Achseinheit weist eine sich in axialer Richtung erstreckende Achse bzw. eine eine axiale Richtung definierende Achse auf. Weiterhin umfasst die Achseinheit eine Klemmeinrichtung an einem ersten Ende der Achseinheit und ein Befestigungseinrichtung an einem zweiten Ende der Achseinheit. Die Spanneinrichtung dient zur Montage und Demontage der Achseinheit an einem Zweirad bzw. ist dazu geeignet. Die Spanneinrichtung umfasst einen Bedienhebel und eine Spannkomponente. Dabei ist die Spannkomponente z. B. von Hand mit der Achseinheit drehfest koppelbar. Die Spannkomponente ist z. B. von Hand auch von der Achseinheit entkoppelbar. Der Einsatz weiteren Werkzeuges zur Koppelung und Entkoppelung der Spannkomponente mit der Achseinheit ist nicht nötig. Die Spanneinrichtung umfasst eine Zwischeneinrichtung mit wenigstens einer Betätigungseinheit. Die Betätigungseinheit ist derart gestaltet bzw. gewährleistet in einer ersten Stellung eine drehfeste Verbindung von der Spannkomponente und dem Bedienhebel. In einer zweiten Stellung ermöglicht die Betätigungseinheit eine Verschwenkung des Bedienhebels gegenüber der Spannkomponente, während die Spannkomponente drehfest mit der Achseinheit gekoppelt sein kann und insbesondere auch damit gekoppelt ist. Das bedeutet, dass die Spannkomponente z. B. drehfest mit der Achseinheit gekoppelt ist, während gleichzeitig der Bedienhebel der Spanneinrichtung in die Drehstellung verbracht werden kann, in der der Bedienhebel gegenüber der Spannkomponente verschwenkbar oder sogar frei um z. B. 60°, 120°, 180°, 270° oder 360° oder mehr oder andere Drehwinkel drehbar ist. Die Spannkomponente weist eine Koppeleinheit mit einer unrunden Koppelkontur zum Koppel mit einer entsprechend angepassten Anschlusseinheit mit einer unrund ausgebildeten Anschlusskontur an der Achseinheit auf. An dem Bedienhebel, der Zwischeneinrichtung und an der Spannkomponente sind jeweils aneinander angepasste unrunde Kopplungskonturen ausgebildet, welche in der Eingriffsstellung in Eingriff miteinander stehen, wobei insbesondere wenigstens ein Teil der unrunden Kopplungskonturen als Verzahnungen an dem Bedienhebel und der Spannkomponente und der Zwischeneinrichtung ausgebildet sind und wobei ein Verhältnis aus einer Überlappungslänge der miteinander im Eingriff stehenden Koppeleinheit und der Anschlusseinheit und einem Durchmesser der Koppeleinheit kleiner als 4:1 und vorzugsweise kleiner als 3:1 beträgt.

Dadurch wird eine frei wählbare Orientierung des Bedienhebels gegenüber der Spannkomponente ermöglicht, ohne die Spanneinrichtung von der Achseinheit zu entkoppeln. Das ist sehr vorteilhaft, da damit auch eine noch einfachere Montage ermöglicht wird, bei der der Bedienhebel nicht mehrmals vollständig gedreht wird, sondern von der Hand des Benutzers jeweils nur um einen kleineren Winkelbetrag von z. B. 30 Grad, 45 Grad oder 60 Grad gedreht wird, bevor die Zwischeneinrichtung wieder von der Eingriffsstellung in die Drehstellung gebracht und der Bedienhebel zurück gedreht wird, um anschließend durch eine erneute Drehung die Schnellspannvorrichtung weiter zu schließen bzw. die aufgebrachte Spannung zu erhöhen.

Dadurch wird es ermöglicht, dass die Spannkomponente erheblich kürzer ausgestaltet wird, als es im Stand der Technik mit einem abnehmbaren Bedienhebel möglich war. Der Bedienhebel bzw. die Schnellspannvorrichtung gemäß der vorliegenden Erfindung muss nicht ein Stück aus der Achseinheit heraus gezogen werden, um eine bequeme Montage zu ermöglichen, sondern kann vollständig in die Achseinheit eingeschoben verbleiben, bis die gewünschte Spannung mit dennoch einfacher und ohne Klemmgefahr erfolgender Bedienung aufgebracht wird.

Dadurch kann ein erheblicher Teil des Gewichts der Spannkomponente eingespart werden, da die Eingriffslänge gegenüber dem Stand der Technik verkürzt und beispielsweise halbiert werden kann. Da die Spannkomponente in der Regel aus einem hochfesten Material und insbesondere Metall und vorzugsweise Stahl besteht, wird dadurch ein erheblicher Teil des Gewichts eingespart. Die Achseinheit kann wenigstens teilweise oder vollständig aus einem leichteren Metall und insbesondere einem Leichtmetall bestehen. Möglich ist aber auch der Einsatz von Stahl und/oder einem faserverstärkten Kunststoff.

Die Spanneinrichtung eignet sich zur Montage und Demontage des Vorderrades, des Hinterrades und auch beispielsweise der Sattelstange bzw. des Sattels, wenn dort eine an die Spannkomponente angepasste Montagehilfe vorgesehen ist. Die Spanneinrichtung ist nicht nur mit der Achseinheit koppelbar und davon entkoppelbar, sondern kann auch vollständig von der Achseinheit abnehmbar ausgestaltet sein.

Die Spannkomponente eine Koppeleinheit mit einer unrunden Koppelkontur zum Koppeln mit einer entsprechend angepassten Anschlusseinheit mit einer unrund ausgebildeten Anschlusskontur an der Achseinheit auf. Das bedeutet, dass die unrunde Koppelkontur der Koppeleinheit mit der unrund ausgebildeten Anschlusskontur der Achseinheit koppelbar ist, um eine drehfeste Verbindung wahlweise herzustellen.

In einer bevorzugten Weiterbildung der Erfindung wird die Koppeleinheit der Spannkomponente zur Montage und Demontage in die Anschlusskontur eingeführt. Möglich und bevorzugt ist es auch, dass die Koppeleinheit der Spannkomponente zur Montage und Demontage auf die Anschlusskontur der Anschlusseinheit aufgebracht wird. Möglich ist es auch, dass ein Teil der Koppeleinheit zur Montage und/oder Demontage in die Anschlusseinheit eingebracht wird, während ein anderer Teil der Koppeleinheit auf einen anderen Teil der Anschlusseinheit aufgeschoben oder aufgebracht wird. Vorzugsweise ist eines der beiden miteinander zu koppelnden Teile "männlich" und das andere Kopplungsteil "weiblich" ausgebildet, um eine passgenaue und drehfeste Kopplung zu bewirken.

In einer bevorzugten Ausgestaltung weist die Koppeleinheit wenigstens ein Außenpolygon und/oder wenigstens ein Innenpolygon auf. Beispielsweise kann die Koppeleinheit einen Außenmehrkant und/oder einen Innenmehrkant aufweisen, um eine passgenaue und drehfeste Kopplung mit der Anschlusseinheit herzustellen.

Es ist von Vorteil, wenn wenigstens eine Rasteinrichtung zur Verrastung der Spannkomponente an der Achseinheit vorgesehen ist. Dadurch kann eine wenigstens im Wesentlichen verliersichere Aufnahme der Spannkomponente an der Achseinheit gewährleistet werden. Ohne das Auftreten besonderer äußerer Kräfte bietet eine solche Rasteinrichtung einen verliersicheren Schutz. Die Rasteinrichtung kann mehrere Rasteinheiten aufweisen, um eine Verrastung in verschiedenen Drehpositionen zu ermöglichen.

Der Bedienhebel ist vorzugsweise in axialer Richtung im Wesentlichen unbeweglich oder nur geringfügig beweglich an der Spanneinrichtung aufgenommen. Denkbar ist es auch, dass der Bedienhebel axial beweglich ist.

Vorzugsweise ist die Zwischeneinrichtung insgesamt oder doch wenigstens die Betätigungseinheit der Zwischeneinrichtung durch eine Bewegung in axialer Richtung gegenüber der Spannkomponente bewegbar. Insbesondere ist durch eine solche Axialbewegung der Betätigungseinheit der Bedienhebel von der Eingriffsstellung in die Drehstellung und umgekehrt bewegbar. Dabei ist es besonders bevorzugt, wenn die Betätigungseinheit durch eine auf die Spannkomponente hin gerichtete axiale Bewegung von der Eingriffsstellung in die Drehstellung bewegbar ist. Dadurch kann in einem einfachen Fall die Betätigungseinheit gedrückt werden, um eine Überführung der Zwischeneinrichtung von der Eingriffsstellung in die Schwenkstellung oder Drehstellung zu bewirken.

Möglich ist es aber auch, dass die Betätigungseinheit durch eine von der Spannkomponente weg gerichtete axiale Bewegung von der Eingriffsstellung in die Drehstellung bewegbar ist. Dadurch kann in einem einfachen Fall die Betätigungseinheit gezogen werden, um eine Überführung der Zwischeneinrichtung von der Eingriffsstellung in die Schwenkstellung oder Drehstellung zu bewirken. Wenn die Betätigungseinheit in der ersten Stellung oder Eingriffsstellung ist, dann ist der Bedienhebel drehfest mit der Spannkomponente gekoppelt. Wenn sich die Betätigungseinheit in der zweiten Stellung oder Drehstellung befindet, dann ist der Bedienhebel gegenüber der Spannkomponente drehbar.

In bevorzugten Ausgestaltungen ist die Zwischeneinrichtung über eine Vorspanneinrichtung in die Eingriffsstellung vorbelastet. Eine solche Vorspanneinrichtung kann eine Spiralfeder oder mehrere Spiralfedern oder sonstige Federn umfassen. Möglich ist auch eine Vorbelastung über magnetische oder sonstige Kräfte. Durch eine Vorbelastung der Zwischeneinrichtung in die Eingriffsstellung wird gewährleistet, dass der Benutzer direkt beim Erfassen des Bedienhebels beispielsweise die Spannung erhöhen oder aber die Schnellspannvorrichtung lösen kann. Möglich ist es aber auch, dass die Schnellspannvorrichtung in die Drehstellung vorbelastet ist, sodass bei einem unabsichtlichen Kontakt mit dem Bedienhebel die Spannkraft unverändert bleibt. Um eine definierte Winkelposition des Bedienhebels auch in einer solchen Ausgestaltung zu gewährleisten, kann die freie Drehbewegung des Bedienhebels über Reibung (z. B. in Form von Rastpunkten) oder dergleichen gehemmt werden, sodass eine einmal eingestellte Drehposition erhalten bleibt. Möglich ist es auch, dass der Bedienhebel in einer oder in einer gewissen Anzahl von Drehpositionen rastend ausgeführt ist.

In vorteilhaften Ausgestaltungen weist die Spannkomponente an einem Ende die Koppeleinheit zur Kopplung mit der Achseinheit und an einem bzw. dem anderen Ende einen insbesondere pilzförmigen oder tellerförmigen Druckknopf auf. Dabei ist an dem Druckknopf vorzugsweise ein umlaufender Kragen vorgesehen, der ein Gegenlager für die Vorspanneinrichtung bildet, die die Zwischeneinrichtung in eine bevorzugte Grundposition und insbesondere die Eingriffsstellung vorbelastet. Der umlaufende Kragen kann Unterbrechungen aufweisen.

In einer bevorzugten Ausgestaltung ist der Bedienhebel in der Eingriffsstellung über einen Drehmomentbegrenzer mit der Achseinheit gekoppelt. Ein solcher Drehmomentbegrenzer dient dazu, das maximale Drehmoment des Bedienhebels zu begrenzen, um eine zu hohe Spannkraft an der Schnellspannvorrichtung zu vermeiden. Dabei kann der Drehmomentbegrenzer so ausgebildet sein, wie es im Stand der Technik üblich und offenbart ist. Das übertragbare Drehmoment kann einstellbar oder auch fest vorgegeben sein.

In allen Ausgestaltungen ist es bevorzugt, dass die Achseinheit wenigstens an dem zweiten Ende hohl ausgebildet ist. Es ist möglich und bevorzugt, dass die Achse der Achseinheit eine durchgehende Öffnung im Inneren aufweist.

Vorzugsweise weist die Achseinheit an dem zweiten Ende ein Außengewinde als Befestigungseinrichtung auf. Möglich ist es aber auch, dass die Befestigungseinrichtung einen Bajonettverschluss aufweist, der in einer Winkelposition eine feste Aufnahme an dem Rahmen eines Zweirads ermöglicht, während der Bajonettverschluss in einer anderen Winkelposition z. B. dem Rahmen des Zweirads entnommen werden kann. Ein solcher Bajonettverschluss kann z. B. in der Form eines Schlüssels/Schlüssellochs ausgebildet sein und mit dem entsprechend ausgestaltetem Rahmen zusammenwirken.

Erfindungsgemäß ist an dem Bedienhebel, der Zwischeneinrichtung und an der Spannkomponente jeweils aneinander angepasste unrunde Eingriffskonturen ausgebildet sind, welche in der Eingriffsstellung in Eingriff miteinander stehen. Da sich die Eingriffskonturen des Bedienhebels, der Zwischeneinrichtung und der Spannkomponente nur über eine gewisse axiale Breite überlappen, können die Eingriffskonturen durch eine relative Axialverschiebung der Zwischeneinrichtung außer Eingriff gebracht werden, wodurch der Bedienhebel frei in beide Drehrichtungen verschwenkt oder sogar einmal oder mehrmals gedreht werden kann.

Die unrunden Eingriffskonturen an dem Bedienhebel, der Zwischeneinrichtung und der Spannkomponente können beispielsweise in der Form von Verzahnungen ausgebildet sein. Bevorzugt sind Ausgestaltungen mit Außen- und Innenpolygonen oder mit Außen- und Innenmehrkantflächen. Besonders bevorzugt sind Radialverzahnungen an dem Bedienhebel, der Zwischeneinrichtung und der Spannkomponente, wobei der Bedienhebel vorzugsweise eine radiale Innenverzahnung aufweist und die Spannkomponente eine radiale Außenverzahnung umfasst. Die Zwischeneinrichtung weist dann vorzugsweise eine radiale Innenverzahnung und eine radiale Außenverzahnung auf. Möglich ist es auch, dass der Bedienhebel mit der Zwischeneinrichtung oder dass die Zwischeneinrichtung mit der Spannkomponente über Axialverzahnungen als Eingriffskonturen im Eingriff steht.

Der Bedienhebel weist vorzugsweise eine Spannhülse auf oder ist damit fest verbunden, wobei die unrunde Eingriffskontur vorzugsweise an der Spannhülse vorgesehen ist.

Erfindungsgemäß beträgt ein Verhältnis aus einer Überlappungslänge der miteinander im Eingriff stehenden Koppeleinheit und der Anschlusseinheit bezogen auf einen Durchmesser der Koppeleinheit kleiner als 4:1 und vorzugsweise kleiner als 3:1 und kann insbesondere auch kleiner als 2:1. Besonders bevorzugt ist ein Verhältnis des in eine Anschlusseinheit einführbaren Teils der Spannkomponente bzw. der Koppeleinheit zu dem Durchmesser des einführbaren Teils der Spannkomponente kleiner als 4:1 und vorzugsweise kleiner als 3:1, wenn die Koppeleinheit der Spannkomponente als "männliches Teil" ausgeführt ist. Wenn die Koppeleinheit der Spannkomponente als "weibliches Teil" ausgeführt ist, dann ist eine Länge des einführbaren Teils der Anschlusseinheit kleiner als dessen vierfacher und insbesondere dreifacher Durchmesser.

Eine Spanneinrichtung eignet sich zur Verwendung in einer Schnellspanneinrichtung, wie sie zuvor beschrieben wurde. Dann dient eine solche Spanneinrichtung zur Montage und Demontage von Zweiradkomponenten an insbesondere wenigstens teilweise muskelbetriebenen Zweirädern wie Fahrrädern. Eine solche Spanneinrichtung umfasst einen Bedienhebel und eine Spannkomponente, wobei die Spannkomponente vorzugsweise manuell mit einer Zweiradkomponente drehfest koppelbar ist. Die Spannkomponente ist vorzugsweise manuell von der Zweiradkomponente entkoppelbar. Die Spanneinrichtung umfasst eine Zwischeneinrichtung mit einer Betätigungseinheit und die Betätigungseinheit gewährleistet in einer ersten Stellung eine drehfeste Verbindung von der Spannkomponente und dem Bedienhebel und ermöglicht in einer zweiten Stellung eine Verschwenkung des Bedienhebels gegenüber der Spannkomponente, insbesondere auch, während die Spannkomponente drehfest mit der Achseinheit und damit der Zweiradkomponente gekoppelt ist.

Auch die Spanneinrichtung hat viele Vorteile, da sie eine einfache Bedienung bei einem insgesamt geringeren Gesamtgewicht ermöglicht. Die Spanneinrichtung benötigt keine Spannkomponente großer axialer Länge, da die Spannkomponente nicht aus einer Zweiradkomponente teilweise herausgezogen werden muss, um den Bedienhebel ohne Klemmgefahr zu bedienen. Der Bedienhebel zur Erzeugung der gewünschten Spannkraft oder zur Verminderung der anliegenden Spannkraft kann ein Stück weit gedreht werden kann und anschließend kann die Zwischeneinrichtung in die Drehstellung überführt werden. Dort kann der Bedienhebel ohne Einfluss auf die Spannkraft entsprechend zurückgedreht werden. Danach wird die Zwischeneinrichtung wieder in die Eingriffsstellung verbracht und dort wird der Bedienhebel zur weiteren Erhöhung (oder Verringerung) der Spannkraft gedreht. Deshalb kann die Spannkomponente kürzer und leichter gestaltet werden. Es ist nicht nötig, die Spannkomponente länger als nötig auszubilden, um eine drehfeste Koppelung auch bei halb herausgezogener Spannkomponente zu gewährleisten.

Eine Spanneinrichtung kann bei der Montage und Demontage unterschiedlichster Zweiradkomponenten eingesetzt werden, sodass es ausreichend ist, eine einzige geeignete Spanneinrichtung an einem Zweirad zu bevorraten. Gegebenenfalls kann der Benutzer die Spanneinrichtung auch am Körper oder in einem Rucksack oder einer Tasche oder dergleichen tragen, sodass die mit der Spanneinrichtung angebrachten Zweiradkomponenten in einem gewissen Umfang vor Diebstahl geschützt sind.

In bevorzugten Ausgestaltungen aller Ausgestaltungen ist an der Spannkomponente wenigstens ein zusätzliches Werkzeug angeordnet oder anzuordnen. Beispielsweise kann an der vorderen Spitze der Spannkomponente ein Schraubendreherwerkzeug integriert sein oder aufgenommen werden. Vorzugsweise ist an der vorderen Spitze ein Torx-Werkzeug angeformt. Ein dadurch erhöhtes Gewicht wird durch den Zusatznutzen wett gemacht. Ein solches zusätzliches Werkzeug oder Schraubendreherwerkzeug kann an verschiedenen Stellen eines Fahrrades verwendet werden. Ein separates Werkzeug ist dann nicht mehr nötig.

Möglich ist es auch, dass das vordere Ende der Spannkomponente einen Hohlraum aufweist, der zur Aufnahme eines Werkzeuges geeignet ist. Beispielsweise können dort austauschbare Bits untergebracht werden, um unterschiedliche Werkzeuge oder Schraubendreherwerkzeuge anschließen zu können. Dadurch können unterschiedlichste Werkzeuge verwendet werden.

In bevorzugten Ausgestaltungen ist die Spanneinrichtung ausgebildet, wie eine Spanneinrichtung einer zuvor beschriebenen Schnellspannvorrichtung.

Ein erfindungsgemäßes Zweirad weist einen Rahmen, eine Gabel, einen wenigstens teilweise muskelbetriebenen Antrieb und Zweiräder, nämlich ein Vorderrad und ein Hinterrad auf. Jedes Rad umfasst eine Nabe und eine Schnellspanneinrichtung, wie sie zuvor beschrieben wurde.

Es sind eine Spanneinrichtung mit einem Bedienhebel und eine Spannkomponente angeordnet. Die Spannkomponente ist z. B. von Hand mit der Achseinheit drehfest koppelbar. Die Spannkomponente ist z. B. von Hand auch von der Achseinheit entkoppelbar. Die Zwischeneinrichtung der Spanneinrichtung ist von einer Eingriffsstellung, in der der Bedienhebel drehfest mit Spannkomponente verbunden ist, in eine Drehstellung bewegbar, in der der Bedienhebel (insbesondere frei) gegenüber der Spannkomponente verschwenkbar oder drehbar ist, insbesondere auch, während die Spannkomponente drehfest mit der Achseinheit gekoppelt ist.

Auch das erfindungsgemäße Zweirad hat viele Vorteile. Das Zweirad kann insgesamt mit einem geringeren Gesamtgewicht zur Verfügung gestellt werden, da durch den Einsatz der Spanneinrichtung insgesamt Gewicht gespart werden kann. Gleichzeitig kann eine einfache Bedienung ermöglicht werden. Vorzugsweise ist genau eine Spanneinrichtung für die Montage und Demontage der beiden Räder vorgesehen. Ein an der vorderen Spitze der Spannkomponente gegebenenfalls integriertes Werkzeug kann an unterschiedlichen Stellen verwendet werden.

In bevorzugten Ausgestaltungen weist das Zweirad wenigstens eine Schnellspannvorrichtung auf, wie sie zuvor beschrieben wurde.

Besonders bevorzugt ist die Spanneinrichtung an der Achseinheit des Hinterrades lösbar befestigt. Besonders bevorzugt ist an dem Vorderrad keine Spanneinrichtung vorgesehen. Dadurch kann eine verbesserte Aerodynamik erzielt werden, da ein an dem Vorderrad nach außen abstehender Bedienhebel die Aerodynamik dort stört. Gleichzeitig wird das Gesamtgewicht reduziert und eine einfachere Bedienung wird ermöglicht.

Insgesamt ermöglicht die Erfindung ein geringeres Gewicht einer Schnellspannvorrichtung und eines Fahrrades insgesamt, insbesondere da nur eine Spanneinrichtung für ein Zweirad insgesamt ausreicht. Wenn die Spanneinrichtung mit dem Bedienhebel am Hinterrad angeordnet wird, so verbessern sich die Optik und insbesondere die Aerodynamik. Die Kosten können reduziert werden, da nur ein Hebel für das Fahrrad insgesamt eingesetzt wird. Die Spanneinrichtung kann nicht nur zur Montage der Räder dienen, sondern beispielsweise auch für die Sattelklemmung oder an anderen Elementen des Fahrrads genutzt werden.

Wird an der Schnittstelle zwischen Spannkomponente und Achseinheit ein konventioneller Innenmehrkant oder ähnliches eingesetzt so kann ein Mechaniker beispielsweise bei einem Rennen das Laufrad mit einem (z. B. Akku-) Schnellschrauber schnell und sicher aus- und einbauen. Während der Wartezeit auf den Servicemechaniker kann der Fahrer trotzdem bereits mit dem Lösen des Laufrades beginnen.

Überraschenderweise hat sich gezeigt, dass trotz des höheren Aufwands für die Spanneinrichtung insgesamt eine noch einfacher zu bedienende Schnellspannvorrichtung mit einem geringeren Gesamtgewicht ermöglicht wird.

Ein erheblicher Vorteil ist in allen Ausgestaltungen auch, dass der Orientierungswinkel des Bedienhebels unabhängig von dem Winkel der Spannkomponente zu der Achseinheit ist. Wird z. B. ein Vierkant oder Sechskant für die Koppeleinheit der Spannkomponente und die Anschlusseinheit der Achseinheit gewählt (eines davon als männliches Teil und das andere als dazu passendes weibliches Teil ausgeführt), so kann die Spannkomponente in genau vier oder sechs unterschiedlichen Winkelpositionen angeordnet werden. Bei der vorliegenden Erfindung kann der Orientierungswinkel aber auch über die relative Winkelposition der Eingriffskonturen des Bedienhebels, der Zwischeneinrichtung und der Spannkomponente zueinander eingestellt werden. Werden dort Verzahnungen mit 12 und insbesondere wenigstens 18 und vorzugsweise 24 Zähnen oder mehr (oder abgerundeten nach außen bzw. innen stehenden Vorsprüngen) gewählt, so kann der Bedienhebel in eine Vielzahl von Positionen verbracht werden. Dann kann der gewünschte Drehwinkel passend zur Gabel oder zu den Ausfallenden eingestellt werden.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Seitenansicht eines Mountainbikes;
- Fig. 2: eine schematische Seitenansicht eines Renn- bzw. Tourenrades;
- Fig. 3: eine Gesamtansicht einer erfindungsgemäßen Schnellspannvorrichtung;
- Fig. 4a: einen vergrößerten Schnitt durch die Schnellspannvorrichtung nach Fig. 3 in der Eingriffsposition;
- Fig. 4b: einen vergrößerten Schnitt durch die Schnellspannvorrichtung nach Fig. 3 in der Drehposition;
- Fig. 5: eine perspektivische Ansicht der Schnellspannvorrichtung nach Fig. 3;
- Fig. 6: eine weitere Schnellspannvorrichtung in einer ersten perspektivischen Ansicht;
- Fig. 7: die Schnellspannvorrichtung nach Fig. 6 in einer anderen perspektivischen Ansicht;
- Fig. 8: einen schematischen Schnitt durch einen Teil der Schnellspannvorrichtung nach Fig. 6 in zusammengebautem Zustand;
- Fig. 9: eine schematische Schnittdarstellung einer weiteren Schnellspannvorrichtung;
- Fig. 10: eine Vorderansicht der Komponenten der Schnellspannvorrichtung nach Fig. 9;
- Fig. 11: noch eine andere erfindungsgemäße Schnellspannvorrichtung in einer perspektivischen Darstellung;
- Fig. 12: die Schnellspannvorrichtung nach Fig. 11 in einer weiteren perspektivischen Darstellung;
- Fig. 13: einen schematischen Querschnitt durch die Schnellspannvorrichtung nach Fig. 11 in der Eingriffsstellung;
- Fig. 14: einen schematischen Querschnitt durch noch eine weitere Schnellspannvorrichtung; und
- Fig. 15: einen schematischen Querschnitt durch eine Zwischeneinrichtung einer erfindungsgemäßen Schnellspannvorrichtung.

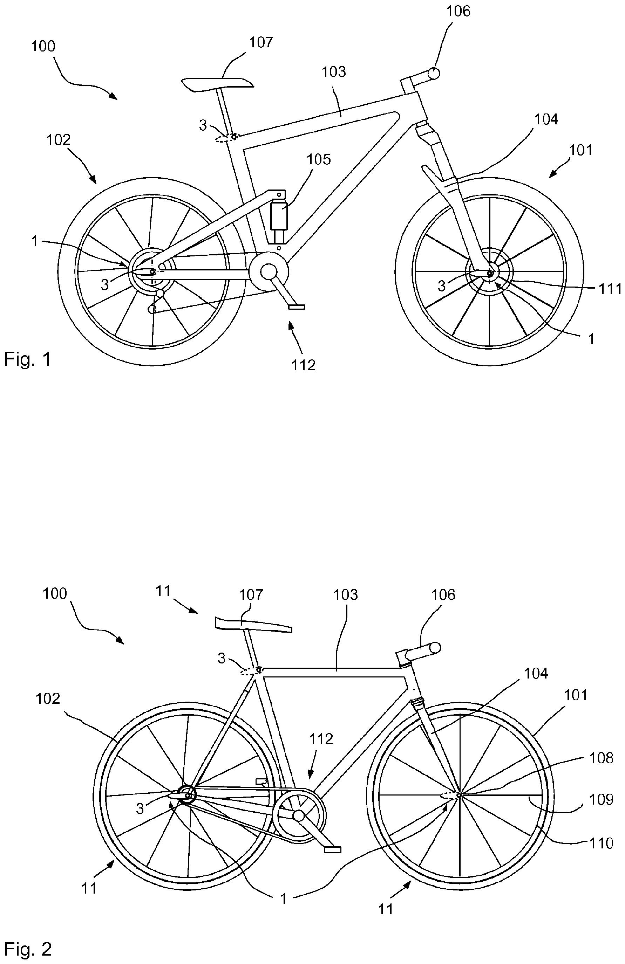

Figur 1 zeigt eine schematische Darstellung eines Mountainbikes als Fahrrad bzw. Zweirad 100. Das Fahrrad weist ein Vorderrad 101, ein Hinterrad 102, einen Rahmen 103, eine Federgabel 104, einen Hinterraddämpfer 105, einen Lenker 106 und einen Sattel 107 auf. Als Antrieb 112 sind Pedale und hier eine Kettenschaltung vorgesehen. Das Vorderrad 101 und das Hinterrad 102 sind jeweils über eine Schnellspannvorrichtung 1 an der Gabel 104 bzw. dem Rahmen 103 befestigt. Die Schnellspannvorrichtung 1 weist dabei eine Spanneinrichtung 3 auf, die gestrichelt an der Sattelstütze des Sattels 107 eingezeichnet ist und die auch zur Einstellung der Sattelhöhe eingesetzt werden kann.

Figur 2 zeigt eine stark schematische Seitenansicht eines Rennrades oder Tourenrades als Zweirad 100, wobei das Fahrrad wiederum über ein Vorderrad 101 und ein Hinterrad 102 verfügt, die an der Gabel 104 bzw. dem Rahmen 103 befestigt sind. Das Vorderrad und das Hinterrad 101, 102 weisen jeweils Speichen 109 und eine Felge 110 auf. Eine Scheibenbremse 111 (vergleiche Figur 1) kann vorgesehen sein, muss es aber nicht. Hier ist eine Schnellspannvorrichtung 1 am Hinterrad inklusive einer Spanneinrichtung 3 eingezeichnet. Die Spanneinrichtung 3 der Schnellspannvorrichtung 1 kann von dem Hinterrad 102 abgenommen und an dem Vorderrad 101 angesetzt werden, wie es in Figur 2 gestrichelt dargestellt ist, um nämlich auch das Vorderrad zu montieren und gegebenenfalls zu demontieren. Die Spanneinrichtung 3 kann auch zur Justage der Höhe des Sattels 107 dienen. Das Vorderrad 101, das Hinterrad 102 und die Sattelstütze können insofern auch als Zweiradkomponenten 11 bezeichnet werden.

Bei dem in Figur 2 dargestellten Zweirad 100 wird ein optisch gefälliger Gesamteindruck erzielt, da der Bedienhebel der Schnellspannvorrichtung 1 nur am Hinterrad vorgesehen ist. Im normalen Betriebszustand ist am Vorderrad 101 keine Spanneinrichtung 3 mit einem dazugehörigen Bedienhebel vorgesehen. Das Gleiche trifft auf die Befestigung der Sattelstütze zu. Im Bedarfsfall kann die Spanneinrichtung 3 mit dem Bedienhebel vom Hinterrad gelöst werden und zur Montage bzw. Demontage des Vorderrades oder der Sattelstütze oder weiterer Zweiradkomponenten 11 verwendet werden.

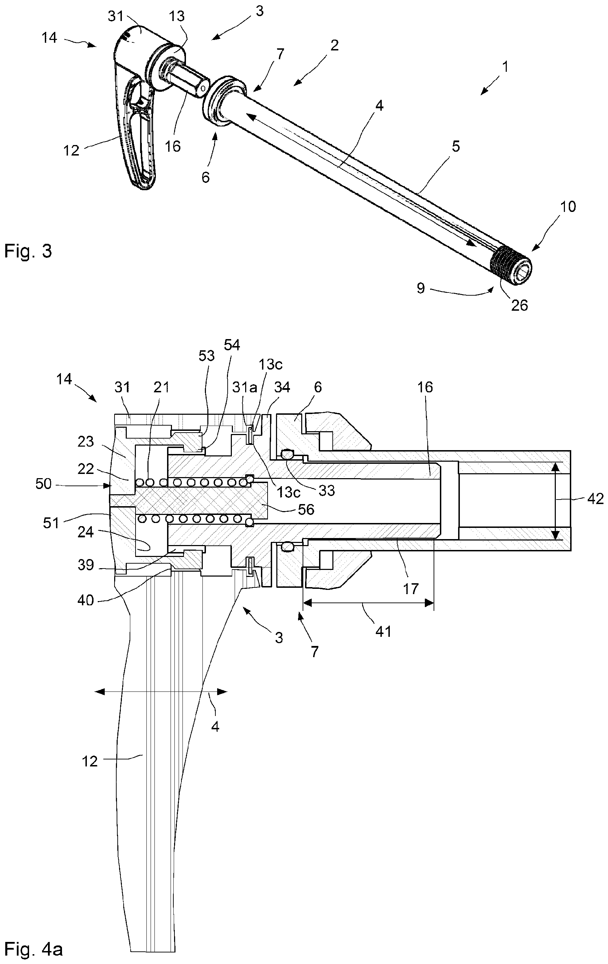

Figur 3 zeigt eine perspektivische Gesamtdarstellung einer erfindungsgemäßen Schnellspannvorrichtung 1 vor dem Einstecken der Spanneinrichtung 3 in die Achseinheit 2. Dadurch ist die Koppeleinheit 16 der Spanneinrichtung 3 in Figur 3 erkennbar. Die Achseinheit 2 umfasst die Achse 5, die hier als Steckachse ausgebildet ist und sich entlang der axialen Richtung 4 erstreckt. An dem ersten Ende 7 der Achse 5 ist eine Klemmeinrichtung 6 vorgesehen, während an dem zweiten Ende 10 der Achse 5 eine Befestigungsreinrichtung 9 angeordnet ist. Die Befestigungseinrichtung 9 ist hier im Ausführungsbeispiel als Außengewinde 26 auf der Achse 5 ausgebildet. Hier im Ausführungsbeispiel wird die Achseinheit 2 durch die Ausfallenden und die Nabe eines Laufrades eingeführt und mittels der Spanneinrichtung 3 wird die Achseinheit 2 an dem Rahmen 103 so befestigt, dass die Nabe 108 zwischen den Ausfallenden des Rahmens 103 oder der Gabel 104 geklemmt wird.

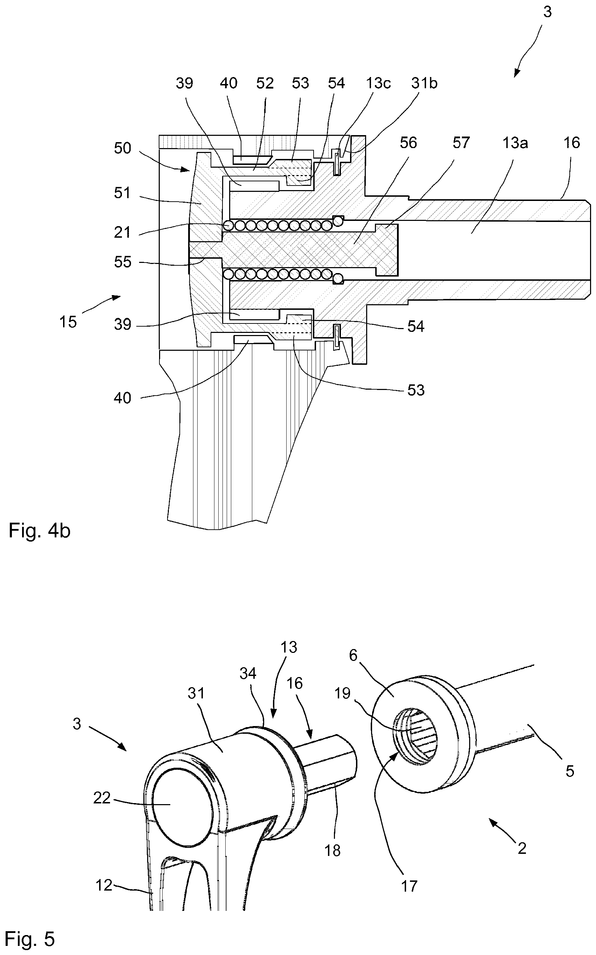

Zur Bedienung dient die Spanneinrichtung 3, die eine Spannkomponente 13 und einen daran befestigten Bedienhebel 12 umfasst. Nach dem Einführen der Koppeleinheit 16 der Spanneinrichtung 3 in die Anschlusseinheit 17 (vgl. Figur 5) der Achseinheit 2 ist die Koppeleinheit 16 drehfest mit der Achseinheit 2 gekoppelt, sodass in der in Figur 3 dargestellten Eingriffsstellung 14 eine Drehbewegung des Bedienhebels 12 zu einer gekoppelten Drehbewegung der Achseinheit 2 und der Achse 5 und somit auch des Außengewindes 26 der Achseinheit 2 führt.

Figur 4a zeigt einen schematischen Querschnitt durch die Spanneinrichtung 3 und einen Teil der Achseinheit 2 in der Eingriffsstellung 14.

Von der Achseinheit 2 ist hier ein Teil der Achse 5 und die Klemmeinrichtung 6 zu sehen. Die Achseinheit 2 weist in ihrem Inneren eine Anschlusseinheit 17 mit einer Anschlusskontur 19 auf (vgl. Figur 5).

Die Spanneinrichtung 3 wird im Wesentlichen durch die Spannkomponente 13, eine Zwischeneinrichtung 50 (vgl. Fig. 4a) und den Bedienhebel 12 gebildet. Der Bedienhebel 12 weist eine hier integral und einstückig ausgebildete Spannhülse 31 auf, von der sich der Handgriff des Bedienhebels 12 aus radial nach außen erstreckt.

Der etwa pilzförmig ausgestaltete Druckknopf 22 ist Teil der Betätigungseinheit 51 und fest mit der Zwischeneinrichtung 50 verbunden..

Der Druckknopf 22 weist am äußeren Ende einen radial abstehenden Kragen 23 auf, der ein Gegenlager 24 für die Vorspanneinrichtung 21 bildet. Die Vorspanneinrichtung 21 ist hier als Spiralfeder ausgebildet, die sich an einem Ende an einem Sprengring oder O-Ring oder dergleichen in einer Ringnut in einer zentralen Bohrung der Spannkomponente 13 abstützt. Das andere Ende stützt sich an dem Gegenlager 24 abstützt. Dadurch wird die Zwischeneinrichtung 50 in die in Figur 4a dargestellte Eingriffsstellung 14 vorbelastet.

In dieser Eingriffsstellung 14 ist die Zwischeneinrichtung 50 drehfest mit der Spannkomponente 13 verbunden. Weiterhin ist die Zwischeneinrichtung 50 drehfest mit dem Bedienhebel 12 verbunden. Dabei steht die Außenverzahnung 39 der Spannkomponente 13 mit der Innenverzahnung 54 der Zwischeneinrichtung 50 im Eingriff. Außerdem ist die Außenverzahnung 53 der Zwischeneinrichtung 50 drehfest mit der Innenverzahnung 40 der Spannhülse 31 im Eingriff. In dieser Eingriffsstellung 14 ist der Bedienhebel 12 drehfest mit der Spannkomponente 13 gekoppelt.

Zur axialen Sicherung des Bedienhebels 12 sind in der Spannhülse 31 und der Spannkomponente 13 Nuten 31a und 13c vorgesehen, in denen ein Sprengring 13c oder ein O-Ring oder dergleichen angeordnet ist. Die Montage kann durch eine Phase an der Spannhülse 31 erleichtert werden.

Die Vorspanneinrichtung 21 wird durch eine Schraube 56 geführt, die mit ihrem Gewinde 51 in den Druckknopf 22 eingeschraubt ist. Der Schraubenkopf 57 liegt in der Eingriffsstellung 14 an dem O-Ring oder Sprengring an und wird bei Betätigung der Betätigungseinheit 51 axial hier nach rechts bewegt.

Zur Anlage und zur besseren Führung der Spanneinrichtung 3 an der Achseinheit 2 dient die Anlagescheibe 34, die an der axial äußeren Seite der Klemmeinrichtung 6 anliegt.

Um im montierten Zustand die Spanneinrichtung 3 verlustsicher an der Achseinheit 2 aufzunehmen, kann ein O-Ring 33 im Inneren der Anschlusseinheit 17 der Klemmeinrichtung 6 vorgesehen sein.

Zur Überführung des Bedienhebels 12 von der Eingriffsstellung 14 in die Drehstellung 15 wird die Betätigungseinheit 51 bzw. der Druckknopf 22 gedrückt und axial nach innen auf die Achseinheit 2 hin entlang der axialen Richtung 4 bewegt. Eine Rückstellung erfolgt über die Federkraft der Vorspanneinrichtung 21.

Figur 4b zeigt die Spanneinrichtung 3 in einer schematisch geschnittenen Darstellung in der zweiten Stellung 15 bzw. der Drehstellung 15. Dabei kann der Bedienhebel 12 hier ortsfest verbleiben. Die Zwischeneinrichtung mit dem Druckknopf 22 und dem hülsenartigen Mittelteil (Übertragungsabschnitt 52) und den Koppelkonturen 53 und 54 wird axial nach innen bewegt, sodass die Vorspanneinrichtung 21 axial komprimiert wird. In der dargestellten Drehposition 15 sind die Innenverzahnung 40 an der Spannhülse 31 und die Außenverzahnung 53 an der Zwischeneinrichtung 50 außer Eingriff, sodass eine freie Drehbewegung des Bedienhebels 12 in beide Drehrichtungen möglich ist. Außerdem sind auch die die Außenverzahnung 39 an der Spannkomponente 13 und die Innenverzahnung 54 an der Zwischeneinrichtung 50 außer Eingriff. Auch dadurch allein würde schon eine freie Drehbewegung des Bedienhebels 12 in beide Drehrichtungen ermöglicht. Dabei kann der Benutzer den Druckknopf 22 drücken und den Bedienhebel 12 drehen. Das bedeutet, dass der Benutzer beispielsweise mit seinem Daumen den Druckknopf 22 gegen die Kraft der Vorspanneinrichtung 21 drückt, um den Bedienhebel 12 in der Drehstellung 15 zu drehen. Nach der Drehung in die gewünschte Position kann der Benutzer den Druckknopf 22 loslassen, sodass sich die Betätigungseinheit 50 bzw. der Druckknopf 22 durch die Vorspannkraft der Vorspanneinrichtung 21 bedingt wieder selbsttätig in die Eingriffsstellung 14 begibt.

Figur 5 zeigt eine andere perspektivische Darstellung eines Teils der Schnellspannvorrichtung 1, wobei die Anschlusseinheit 17 mit der inneren Anschlusskontur 19 an der Achseinheit 2 erkennbar ist. Die Koppeleinheit 16 weist hingegen eine außen liegende Koppelkontur 18 auf, die entsprechend an die Anschlusskontur 19 der Anschlusseinheit 17 angepasst ist. Hier sind die Koppeleinheit 16 und die Anschlusseinheit 17 als Außensechskant bzw. Innensechskant ausgeführt. Der Druckknopf 22 bildet auch hier die Betätigungseinheit 51 der Zwischeneinrichtung 50 im Inneren.

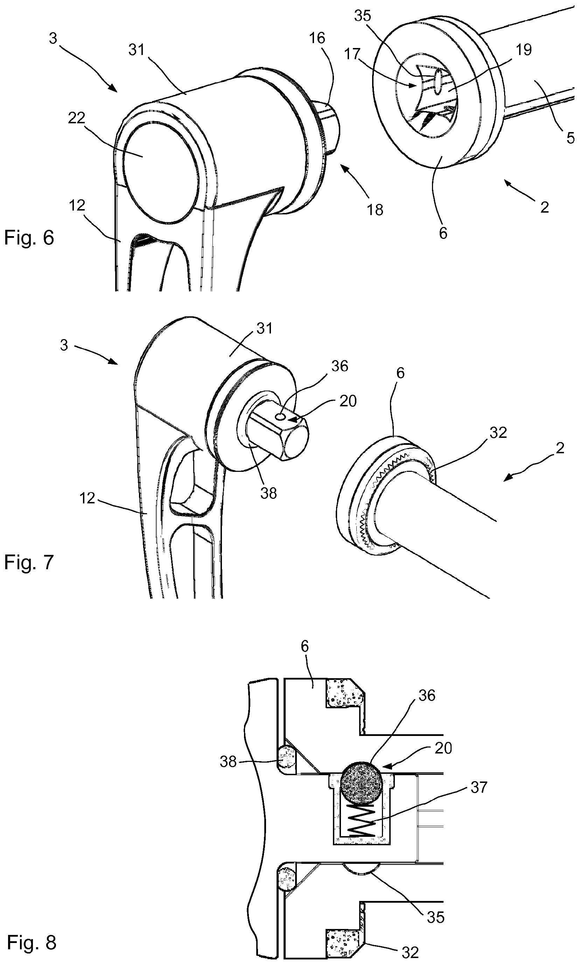

Figur 6 zeigt ein anderes Ausführungsbeispiel einer erfindungsgemäßen Schnellspannvorrichtung 1, die wiederum eine Achseinheit 2 und eine Spanneinrichtung 3 umfasst.

Die Koppelkontur 18 der Koppeleinheit 16 ist hier als Außenvierkant ausgebildet, während in der Achseinheit 2 eine entsprechende Anschlusskontur 19 der Anschlusseinheit 17 vorgesehen ist, um den Vierkant der Koppeleinheit 16 passgenau aufzunehmen.

Zusätzlich sind hier mehrere Rastvertiefungen 35 an der Achseinheit 2 vorgesehen, die Teil einer Rasteinrichtung 20 sind. Solche Rastvertiefungen können in allen Ausführungsbeispielen vorhanden sein.

Figur 7 zeigt eine andere perspektivische Darstellung der Schnellspannvorrichtung 1 nach Figur 6, wobei hier der Rastvorsprung 36 der Rasteinrichtung 20 an der Koppeleinheit 16 zu erkennen ist. Der Rastvorsprung 36 ist in die dargestellte Position durch eine Feder vorbelastet und dient zur Verrastung mit der Rastvertiefung 35 an der Anschlusseinheit 17. Ein O-Ring 38 ist an dem Übergang zwischen der Anlagescheibe 34 und der Koppeleinheit 16 vorgesehen.

An der Klemmeinrichtung 6 ist eine Rändelscheibe 32 vorgesehen.

Figur 8 zeigt einen Teil eines schematischen Querschnitts durch die Schnellspannvorrichtung 1 nach Figur 6 im zusammengebauten Zustand. Der Rastvorsprung 36 wird durch eine Kugel gebildet, die durch eine Rastfeder 37 in die dargestellte Position vorbelastet ist. Die Kugel und somit der Rastvorsprung 36 greift in eine der hier vier vorgesehenen Rastvertiefungen 35 ein. Dadurch wird ein zuverlässiger Halt der Schnellspannvorrichtung 1 an der Achseinheit 2 erzielt. Durch eine entsprechende Federkraft kann die Haltekraft eingestellt werden. Die Funktion der Schnellspannvorrichtung 1 ist so wie in den vorausgegangenen Ausführungsbeispielen.

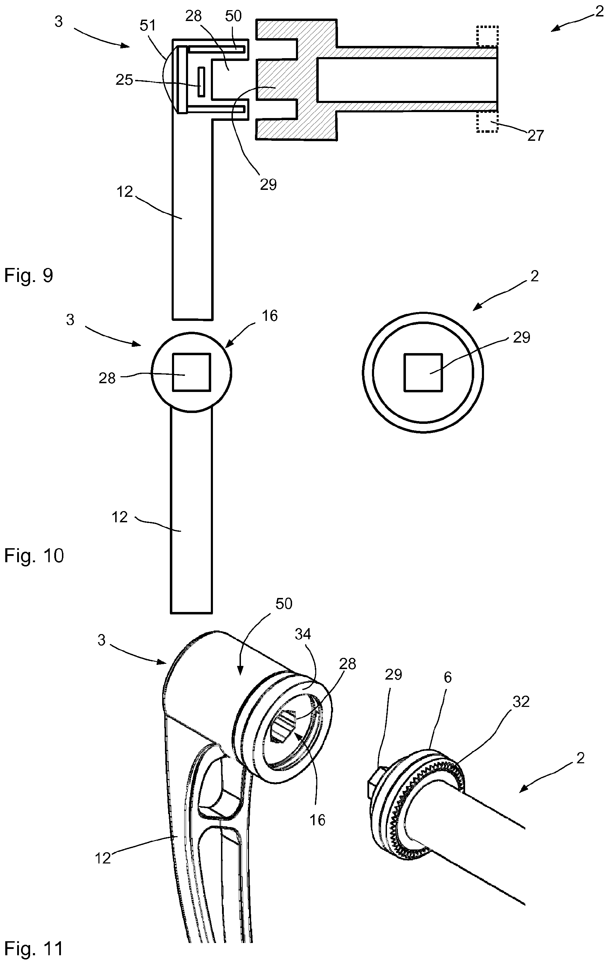

Figur 9 zeigt ein weiteres stark schematisches Ausführungsbeispiel einer weiteren erfindungsgemäßen Schnellspannvorrichtung 1. Dabei ist auf der linken Seite die Spanneinrichtung 3 mit der Betätigungseinheit 51 dargestellt, während auf der rechten Seite die Achseinheit 2 schematisch abgebildet ist. Die Betätigungseinheit 51 der Zwischeneinrichtung 50 dient zur wahlweisen Kopplung und Entkopplung des Bedienhebels 12 von der Koppelkontur 28, so wie es zuvor beschrieben wurde.

In Figur 10 sind die Vorderansichten der Spanneinrichtung 3 und der Achseinheit 2 abgebildet. Hier bildet die Anschlusseinheit 17 eine "männliche" Anschlusskontur 29, die in eine "weibliche" ausgebildete Koppelkontur 28 der Koppeleinheit 16 eingreifen kann. Wie in Figur 10 zu erkennen, ist die Anschlusskontur 29 hier als Vierkant ausgebildet, kann aber ebenso als Sechskant ausgebildet werden oder eine sonstige Verzahnung aufweisen, die mit einer entsprechende Verzahnung oder dergleichen der Koppeleinheit 16 zusammenwirkt.

Zusätzlich ist hier ein Drehmomentbegrenzer 25 vorgesehen, der verhindert, dass ein vorbestimmtes Drehmoment bei der Montage überschritten wird. Dadurch wird gewährleistet werden, dass bei der Montage mit dem Bedienhebel 12 immer das vorgesehene Drehmoment angelegt und nicht überschritten wird. Ein Drehmomentbegrenzer 25 kann in allen Ausführungsbeispielen vorhanden sein.

Figur 11 zeigt ein weiteres Ausführungsbeispiel einer erfindungsgemäßen Schnellspannvorrichtung in einer schematischen perspektivischen Darstellung, wobei hier die männlich ausgebildete Anschlusskontur 29 der Anschlusseinheit 17 von der Achseinheit 2 nach außen vorsteht. Dementsprechend ist in der Spanneinrichtung 3 eine Koppeleinheit 16 mit einer weiblich ausgebildeten Koppelkontur 28 vorgesehen, in die die Anschlusskontur 29 der Anschlusseinheit 17 eingreift, um beispielsweise ein Laufrad zu montieren oder zu demontieren. Im Inneren ist ein wesentlicher Teil der Zwischeneinrichtung eingebaut, der über die von der anderen und hier nicht sichtbaren Seite über den Bedienknopf als Betätigungseinheit betätigt werden kann, um den Bedienhebel 12 von der Spannkomponente 13 zu entkoppeln.

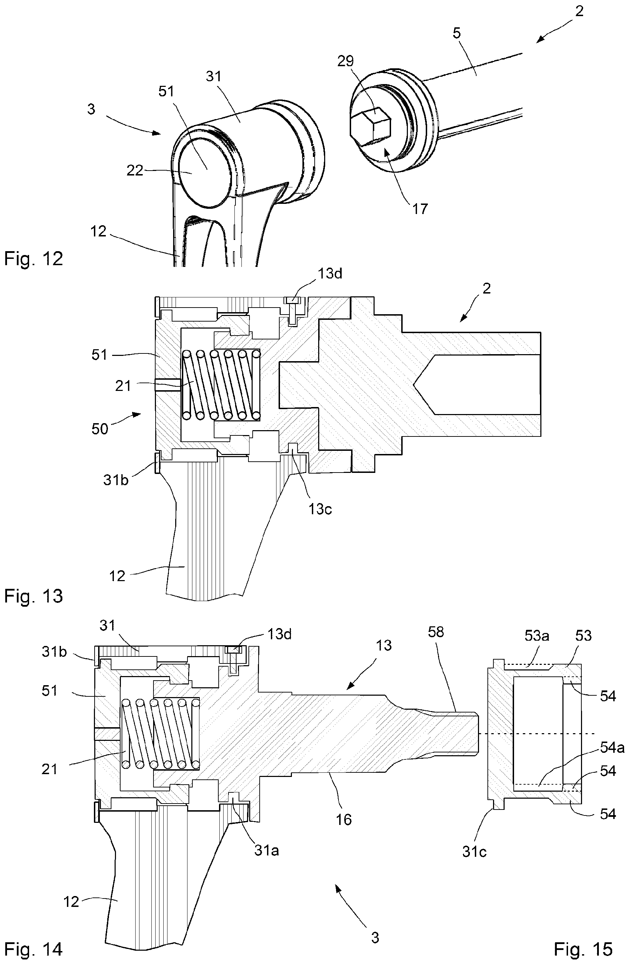

Figur 12 zeigt eine schematische perspektivische Darstellung von der anderen Seite aus, sodass die Anschlusseinheit 17 mit der hier männlich ausgebildeten Anschlusskontur 29 klar erkennbar ist.

Figur 13 zeigt einen schematischen Querschnitt durch die Schnellspannvorrichtung 1, die funktionell bzgl. der Kopplung des Bedienhebels 12 mit der Spannkomponente 1 hier grundsätzlich genauso funktioniert, wie in allen anderen Ausführungsbeispielen auch. Wie im Schnitt gemäß Figur 13 klar erkennbar ist, ragt die Anschlusskontur 29 der Anschlusseinheit 17 in die Spanneinrichtung 3 hinein und ist formschlüssig mit der Koppelkontur 28 der Koppeleinheit 16 verbunden.

Hier im Ausführungsbeispiel ist die Vorspanneinrichtung 21 anders abgestützt als in den vorhergehenden Ausführungsbeispielen. Die Spannkomponente weist hier keinen durchgehenden Hohlraum 13a oder eine Bohrung auf. Am hier axial linken Ende stützt sich das linke Ende der Spiralfeder 21 ab, die die Zwischeneinrichtung 50 in die Eingriffsstellung 14 vorbelastet. Die Zwischeneinrichtung 50 bzw. der Druckknopf 51 wird axial nach links durch einen Halter 31b an der Spannhülse 31 gesichert. Der Halter 31b kann Teil einer umlaufenden ringförmigen Wandung sein. Oder der Halter 31b wird durch einzelne Nasen 31b gebildet. Der Halter 31b kann durch Klemmung, Klebung oder durch Schrauben oder sonstige Befestigungsmethoden an der Spannhülse 31 befestigt werden. Die Spannhülse 31 wird hier durch eine Schraube 13d (oder mehrere davon) axial gesichert. Dazu wird die Schraube 13d von außen eingeschraubt. Das Ende wird in einer umlaufenden Nut 13c axial fixiert, sodass die Spannhülse lösbar befestigt wird. Auch in diesem Ausführungsbeispiel sind Koppelkonturen 39, 40, 53, 54 vorgesehen, die wahlweise miteinander gekoppelt werden können oder voneinander entkoppelt werden können.

Figur 14 zeigt einen weiteren schematischen Querschnitt durch eine Schnellspannvorrichtung 1, die funktionell bzgl. der Kopplung des Bedienhebels 12 mit der Spannkomponente 1 hier grundsätzlich wieder genauso funktioniert, wie in allen anderen Ausführungsbeispielen auch. Die Koppeleinheit 16 der Spannkomponente 13 ragt axial nach außen (männliche Form). Am axialen Ende ist hier ein Werkzeugkopf bzw. ein Werkzeug 58 integriert. Das Werkzeug 58 weist einen geringeren Durchmesser auf als die Koppeleinheit 16. Vorzugsweise ist am axialen Ende ein Schraubendreherwerkzeug integriert. Insbesondere ist das Werkzeug 58 als Torx-Werkzeug ausgebildet.

Möglich ist es auch, dass in einem Hohlraum 13a der Spannkomponente ein Werkzeug verdrehsicher aufnehmbar ist. Zum Beispiel kann ein Bit unterschiedlicher Form aufgenommen werden.

Fig. 15 zeigt Varianten eines Zwischenstücks 50, die sich für den Einsatz in allen Ausführungsbeispielen eignet. Dabei ist gestrichelt eingezeichnet in der oberen Hälfte eine Variante, bei der sich die radiale Außenkontur (Außenverzahnung) 53a über eine größere Länge und insbesondere über die wesentliche Länge der Spannhülse 31 erstreckt. Eine Entkopplung der Koppelkontur 40 (Innenkontur) tritt dabei praktisch nicht auf. Das ist auch nicht nötig, wenn die Koppelkontur 54 in der Drehstellung außer Eingriff mit der Koppelkontur 39 gerät. Dementsprechend ist es auch möglich, die Koppelkontur 54a über eine längere axiale Erstreckung auszuführen, wenn die Koppelkontur 53 so gestaltet ist, dass sie in der Drehstellung außer Eingriff mit der Koppelkontur 40 gerät.

Insgesamt wird durch die Erfindung eine leichte Schnellspannvorrichtung 1 zur Verfügung gestellt, die sehr einfach zu bedienen ist. Dadurch, dass der Bedienhebel 12 außer Eingriff mit der Spannkomponente 13 gebracht werden kann, wird eine einfache Montage und Demontage von Laufrädern ermöglicht. Die Länge der Spannkomponente 13, die regelmäßig aus festem Stahl besteht, kann deutlich reduziert werden. Auch wenn die Spannkomponente 13 teilweise oder vollständig aus einem leichteren Metall oder dergleichen gebildet werden sollte, kann das Gesamtgewicht hier insgesamt erheblich reduziert werden. Das gilt auch dann, wenn ein Werkzeug 58 an dem axialen Ende der Spannkomponente 13 ausgeformt wird.

Da es bei sportlichen Fahrrädern auf jedes Gramm Gewicht ankommt, kann so ein erheblicher Beitrag zur Gewichtsverringerung geleistet werden. Außerdem können die Aerodynamik und die Optik eines damit ausgerüsteten Fahrrads verbessert werden, wenn z. B. nur am Hinterrad eine Spanneinrichtung 3 angeordnet ist, während am Vorderrad nur eine Achseinheit 2 verbleibt.

### Bezugszeichenliste:

| | | | |
|---|---|---|---|
| 1 | Schnellspannvorrichtung | 33 | O-Ring |
| 2 | Achseinheit | 34 | Anlagescheibe |
| 3 | Spanneinrichtung | 35 | Rastvertiefung |
| 4 | axialer Richtung | 36 | Rastvorsprung |
| 5 | Achse, Steckachse | 37 | Rastfeder |
| 6 | Klemmeinrichtung | 38 | O-Ring |
| 7 | erstes Ende | 39 | Koppelkontur, |
| 9 | Befestigungseinrichtung | | Außenverzahnung |
| 10 | zweites Ende | 40 | Koppelkontur, |
| 11 | Zweiradkomponente | | Innenverzahnung |
| 12 | Bedienhebel | 41 | Überlappungslänge |
| 13 | Spannkomponente | 42 | Durchmesser |
| 13a | Hohlraum | 50 | Zwischeneinrichtung |
| 13b | Nut | 51 | Betätigungseinheit, |
| 13c | Sprengring | | Bedienknopf |
| 13d | Schraube | 52 | Übertragungsabschnitt |
| 14 | erste Stellung, | 53 | Koppelkontur, |
| | Eingriffsstellung | | Außenverzahnung |
| 15 | zweite Stellung, | 54 | Koppelkontur, |
| | Drehstellung | | Innenverzahnung |
| 16 | Koppeleinheit | 55 | Gewinde |
| 17 | Anschlusseinheit | 56 | Schraube |
| 18 | Koppelkontur (m) | 57 | Schraubenkopf |
| | | 58 | Werkzeug |
| 19 | Anschlusskontur (w) | 100 | Zweirad, Fahrrad |
| 20 | Rasteinrichtung | 101 | Rad, Vorderrad |
| 21 | Vorspanneinrichtung | 102 | Rad, Hinterrad |
| 22 | Druckknopf | 103 | Rahmen |
| 23 | Kragen | 104 | Gabel |
| 24 | Gegenlager | 105 | Dämpfer |
| 25 | Drehmomentbegrenzer | 106 | Lenker |
| 26 | Außengewinde | 107 | Sattel |
| 27 | Bajonettverschluss | 108 | Nabe |
| 28 | Koppelkontur (w) | 109 | Speiche |
| 29 | Anschlusskontur (m) | 110 | Felge |
| 30 | Gewinde (in 13 bzw. 22) | 111 | Scheibenbremse |
| 31 | Spannhülse | 112 | Antrieb |
| 31a | Nut | | |
| 31b | Halter, Ringscheibe | | |
| 31c | Nase | | |
| 32 | Rändelscheibe | | |

## Patentansprüche

1. Schnellspannvorrichtung (1), insbesondere für wenigstens teilweise muskelbetriebene Zweiräder (100) wie Fahrräder, mit einer Achseinheit (2) und einer Spanneinrichtung (3),
wobei die Achseinheit (2) eine sich in axialer Richtung (4) erstreckende Achse (5), eine Klemmeinrichtung (6) an dem ersten Ende (7) der Achseinheit (2) und eine Befestigungseinrichtung (9) an einem zweiten Ende (10) der Achseinheit (2) aufweist, wobei die Spanneinrichtung (3) zur Montage und Demontage der Achseinheit (2) an einem Zweirad (100) geeignet ist,
wobei die Spanneinrichtung (3) einen Bedienhebel (12) und ein Spannkomponente (13) umfasst, wobei die Spannkomponente (13) mit der Achseinheit (2) drehfest koppelbar ist, und wobei die Spannkomponente (13) von der Achseinheit (2) entkoppelbar ist,wobei die Spanneinrichtung (3) eine Zwischeneinrichtung (50) mit einer Betätigungseinheit (51) umfasst,
und dass die Betätigungseinheit (51) in einer ersten Stellung (14) eine drehfeste Verbindung von der Spannkomponente (13) und dem Bedienhebel (12) gewährleistet
und in einer zweiten Stellung (15) eine Verschwenkung des Bedienhebels (12) gegenüber der Spannkomponente (13) ermöglicht, während die Spannkomponente (13) drehfest mit der Achseinheit (2) gekoppelt sein kann,
**dadurch gekennzeichnet,**
**dass** die Spannkomponente (13) eine Koppeleinheit (16) mit einer unrunden Koppelkontur (18, 28) zum Koppeln mit einer entsprechend angepassten Anschlusseinheit (17) mit einer unrund ausgebildeten Anschlusskontur (19, 29) an der Achseinheit (2) aufweist,
und **dass** an dem Bedienhebel (12), der Zwischeneinrichtung (50) und an der Spannkomponente (13) jeweils aneinander angepasste unrunde Kopplungskonturen (39, 40, 53, 54) ausgebildet sind, welche in der Eingriffsstellung (14) in Eingriff miteinander stehen, wobei insbesondere wenigstens ein Teil der unrunden Kopplungskonturen (39, 40, 53, 54) als Verzahnungen an dem Bedienhebel (12) und der Spannkomponente (13) und der Zwischeneinrichtung (50) ausgebildet sind und wobei ein Verhältnis aus einer Überlappungslänge (41) der miteinander im Eingriff stehenden Koppeleinheit (16) und der Anschlusseinheit (17) und einem Durchmesser (42) der Koppeleinheit kleiner als 4:1 beträgt.

2. Schnellspannvorrichtung (1) nach Anspruch 1, wobei an der Spannkomponente (13) wenigstens ein zusätzliches Werkzeug (58) angeordnet ist.

3. Schnellspannvorrichtung (1) nach einem der vorhergehenden Ansprüche, wobei die Koppeleinheit (16) der Spannkomponente (13) zur Montage und Demontage in die Anschlusskontur (19) eingeführt wird oder wobei die Koppeleinheit (16) der Spannkomponente (13) zur Montage und Demontage auf die Anschlusskontur (29) der Anschlusseinheit (17) aufgebracht wird.

4. Schnellspannvorrichtung (1) nach dem vorhergehenden Anspruch, wobei die Koppeleinheit (16) einen Außenpolygon (18) und/oder einen Innenpolygon (28) aufweist.

5. Schnellspannvorrichtung (1) nach einem der vorhergehenden Ansprüche, wobei wenigstens eine Rasteinrichtung (20) zur Verrastung der Spannkomponente (13) an der Achseinheit (2) vorgesehen ist, um die Spannkomponente (13) verliersicher an der Achseinheit (2) aufzunehmen.

6. Schnellspannvorrichtung (1) nach einem der vorhergehenden Ansprüche, wobei die Betätigungseinheit (51) durch eine Bewegung in axialer Richtung (4) gegenüber der Spannkomponente (13) bewegbar ist, um eine Kopplung von dem Bedienhebel (12) und der Spannkomponente (13) zu beeinflussen.

7. Schnellspannvorrichtung (1) nach einem der vorhergehenden Ansprüche, wobei die Betätigungseinheit (51) über eine Vorspanneinrichtung (21) in die Eingriffsstellung (14) vorbelastet ist.

8. Schnellspannvorrichtung (1) nach einem der vorhergehenden Ansprüche, wobei die Spannkomponente (13) an einem Ende die Koppeleinheit (16) zur Kopplung mit der Achseinheit (2) und an dem anderen Ende einen mit einem Kragen (23) versehenen Druckknopf (22) aufweist.

9. Schnellspannvorrichtung (1) nach einem der vorhergehenden Ansprüche, wobei der Bedienhebel (12) in der Eingriffsstellung (14) über einen Drehmomentbegrenzer (25) mit der Achseinheit (2) gekoppelt ist.

10. Schnellspannvorrichtung (1) nach einem der vorhergehenden Ansprüche, wobei die Achseinheit (2) wenigstens an dem zweiten Ende (10) hohl ausgebildet ist und/oder wobei die Achseinheit (3) an dem zweiten Ende (7) ein Außengewinde (26) als Befestigungseinrichtung (9) aufweist.

11. Schnellspannvorrichtung (1) nach einem der vorhergehenden Ansprüche, wobei die Befestigungseinrichtung (9) einen Bajonettverschluss (27) aufweist.

12. Zweirad (100) mit einem Rahmen (103) und einer Gabel (104) und einem wenigstens teilweise muskelbetriebenen Antrieb (112) und zwei Rädern (101, 102), nämlich einem Vorderrad (101) und einem Hinterrad (102), wobei jedes Rad eine Nabe (108) und eine Schnellspannvorrichtung (1) nach wenigstens einem der Ansprüche 1 bis 11 aufweist.

13. Zweirad (100) nach Anspruch 12, wobei genau eine Spanneinrichtung (3) für die Montage und Demontage der Räder (101, 102) vorgesehen ist und/oder wobei die Spanneinrichtung (3) an der Achseinheit (2) des Hinterrades (102) lösbar befestigt ist.

## Claims

1. Quick release device (1), in particular for at least partially muscle-powered, two-wheeled vehicles (100) such as bicycles, having an axle unit (2) and a clamping mechanism (3), wherein the axle unit (2) comprises an axle (5) extending in the axial direction (4), a locking means (6) at the first end (7) of the axle unit (2), and a fastener (9) at the second end (10) of the axle unit (2), wherein the clamping mechanism (3) is suitable for mounting and demounting the axle unit (2) to/from a two-wheeled vehicle (100), wherein the clamping mechanism (3) comprises an operating lever (12) and a clamping component (13), wherein the clamping component (13) can be non-rotatably coupled with the axle unit (2), and wherein the clamping component (13) can be decoupled from the axle unit (2), wherein the clamping mechanism (3) comprises an intermediate device (50) with an actuating unit (51),
and that the actuating unit (51) ensures, in a first position (14), a non-rotatable connection of the clamping component (13) and the operating lever (12), and in a second position (15) allows the operating lever (12) to pivot relative to the clamping component (13), while the clamping component (13) may remain non-rotatably coupled with the axle unit (2), **characterized in**
**that** the clamping component (13) comprises a coupling unit (16) having a non-round coupling contour (18, 28) for coupling with a mating connecting unit (17) having a non-round connecting contour (19, 29) on the axle unit (2), and that the operating lever (12), the intermediate device (50) and the clamping component (13) each show non-round coupling contours (39, 40, 53, 54) mating with one another, which are engaged with one another in the engagement position (14), wherein in particular at least part of the non-round coupling contours (39, 40, 53, 54) is configured as toothing on the operating lever (12) and the clamping component (13) and the intermediate device (50), and wherein the ratio of the length of overlap (41) of the coupling unit (16) in engagement with the connecting unit (17), relative to a diameter (42) of the coupling unit, is less than 4:1.

2. The quick release device (1) according to claim 1, wherein at least one additional tool (58) is disposed on the clamping component (13).

3. The quick release device (1) according to any of the preceding claims, wherein the coupling unit (16) of the clamping component (13) is inserted into the connecting contour (19) for mounting and demounting, or wherein the coupling unit (16) of the clamping component (13) is applied on the connecting contour (29) of the connecting unit (17) for mounting and demounting.

4. The quick release device (1) according to the preceding claim, wherein the coupling unit (16) shows an outer polygon (18) and/or an inner polygon (28).

5. The quick release device (1) according to any of the preceding claims, wherein at least one click-in mechanism (20) is provided for the clamping component (13) to click into the axle unit (2) to accommodate the clamping mechanism (13) on the axle unit (2) secure against loss.

6. The quick release device (1) according to any of the preceding claims, wherein the actuating unit (51) can be moved relative to the clamping component (13) by way of movement in the axial direction (4), so as to influence a coupling of the operating lever (12) and the clamping component (13).

7. The quick release device (1) according to any of the preceding claims, wherein the actuating unit (51) is biased by way of a biasing device (21) in the engagement position (14).

8. The quick release device (1) according to any of the preceding claims, wherein the clamping component (13) comprises at one end, the coupling unit (16) for coupling with the axle unit (2) and at the other end, a push button (22) provided with a collar (23) .

9. The quick release device (1) according to any of the preceding claims, wherein in the engagement position (14), the operating lever (12) is coupled with the axle unit (2) via a torque limiter (25).

10. The quick release device (1) according to any of the preceding claims, wherein the axle unit (2) is configured hollow at least at the second end (10), and/or wherein the axle unit (3) comprises an external thread (26) as a fastener (9) at the second end (7).

11. The quick release device (1) according to any of the preceding claims, wherein the fastener (9) comprises a bayonet joint (27).

12. Two-wheeled vehicle (100) comprising a frame (103) and a fork (104) and an at least partially muscle-powered drive (112) and two wheels (101, 102), namely a front wheel (101) and a rear wheel (102), wherein each wheel comprises a hub (108) and a quick release device (1) according to at least one of the claims 1 to 11.

13. The two-wheeled vehicle (100) according to claim 12, wherein exactly one clamping mechanism (3) is provided for mounting and demounting the wheels (101, 102), and/or wherein the clamping mechanism (3) is releasably fastened to the axle unit (2) of the rear wheel (102).

## Revendications

1. Dispositif de serrage rapide (1), en particulier pour deux-roues (100) à propulsion au moins partiellement humaine tels que des bicyclettes, avec une unité d'essieu (2) et un dispositif de serrage (3),
l'unité d'essieu (2) ayant un essieu (5) se prolongeant dans la direction axiale (4), un dispositif de pinçage (6) à la première extrémité (7) de l'unité d'essieu (2) et un dispositif de fixation (9) à une deuxième extrémité (10) de l'unité d'essieu (2), le dispositif de serrage (3) étant adapté pour le montage et démontage de l'unité d'essieu (2) sur un deux-roues (100),
le dispositif de serrage (3) comprenant un levier d'actionnement (12) et un composant de serrage (13), le composant de serrage (13) pouvant être couplé de manière immobile en rotation à l'unité d'essieu (2), et le composant de serrage (13) pouvant être découplé de l'unité d'essieu (2), le dispositif de serrage (3) comprenant un dispositif intermédiaire (50) avec une unité d'actionnement (51), et l'unité d'actionnement (51) assurant dans une première position (14) une connexion immobile en rotation du composant de serrage (13) et du levier d'actionnement (12) et permettant dans une seconde position (15) au levier de commande (12) de pivoter par rapport au composant de serrage (13), tandis que le composant de serrage (13) peut être couplé de manière immobile en rotation à l'unité d'essieu (2),
**caractérisé en ce que**
le composant de serrage (13) présente une unité de couplage (16) avec un contour de couplage non circulaire (18, 28) pour le couplage à une unité de raccordement (17) conformément adaptée avec un contour de raccordement non circulaire (19, 29) sur l'unité d'essieu (2),
et **en ce que** sur le levier d'actionnement (12), le dispositif intermédiaire (50) et sur le composant de serrage (13) sont respectivement formés des contours de couplage non circulaires (39, 40, 53 , 54) adaptés l'un à l'autre, qui dans la position d'engagement (14) sont engagés l'un avec l'autre, en particulier au moins une partie des contours de couplage non circulaires (39, 40, 53, 54) étant formés sous la forme de dentures sur le levier d'actionnement (12) et le composant de serrage (13) et le dispositif intermédiaire (50) et un rapport d'une longueur de recouvrement (41) de l'unité de couplage réciproque (16) et de l'unité de raccordement (17) engagés l'un avec l'autre et d'un diamètre (42) de l'unité de couplage étant inférieur à 4:1.

2. Dispositif de serrage rapide (1) selon la revendication 1, dans lequel un outil supplémentaire (58) est agencé au composant de serrage (13).

3. Dispositif de serrage rapide (1) selon l'une des revendications précédentes, dans lequel l'unité de couplage (16) du composant de serrage (13) est inséré dans le contour de raccordement (19) pour le montage et le démontage ou dans lequel l'unité de couplage (16) du composant de serrage (13) est appliqué sur le contour de raccordement (29) de l'unité de raccordement (17) pour le montage et le démontage.

4. Dispositif de serrage rapide (1) selon la revendication précédente, dans lequel l'unité de couplage (16) présente un polygone extérieur (18) et/ou un polygone intérieur (28).

5. Dispositif de serrage rapide (1) selon l'une des revendications précédentes, dans lequel au moins un dispositif d'encliquetage (20) est prévu pour verrouiller le composant de serrage (13) à l'unité d'essieu (2) afin d'accueillir le composant de serrage (13) sur l'unité d'essieu (2) de manière imperdable.

6. Dispositif de serrage rapide (1) selon l'une des revendications précédentes, dans lequel l'unité d'actionnement (51) peut être déplacée par un mouvement dans la direction axiale (4) par rapport au composant de serrage (13) afin d'influencer un couplage du levier d'actionnement (12) et du composant de serrage (13).

7. Dispositif de serrage rapide (1) selon l'une des revendications précédentes, dans lequel l'unité d'actionnement (51) est précontrainte dans la position d'engagement (14) via un dispositif de précontrainte (21).

8. Dispositif de serrage rapide (1) selon l'une des revendications précédentes, dans lequel le composant de serrage (13) présente à une extrémité l'unité de couplage (16) pour le couplage à l'unité d'essieu (2) et à l'autre extrémité un bouton-poussoir (22) munie d'une collerette (23).

9. Dispositif de serrage rapide (1) selon l'une des revendications précédentes, dans lequel le levier d'actionnement (12) est couplé dans la position d'engagement (14) à l'unité d'essieu (2) via un limiteur de couple (25).

10. Dispositif de serrage rapide (1) selon l'une des revendications précédentes, dans lequel l'unité d'essieu (2) est creuse au moins à la deuxième extrémité (10) et/ou dans lequel l'unité d'essieu (3) présente un filetage extérieur (26) en tant que dispositif de fixation (9) à la deuxième extrémité (7).

11. Dispositif de serrage rapide (1) selon l'une des revendications précédentes, dans lequel le dispositif de fixation (9) comporte une fermeture à baïonnette (27).

12. Deux-roues (100) avec un châssis (103) et une fourche (104) et un entraînement (112) à propulsion au moins partiellement humaine et deux roues (101, 102), à savoir une roue avant (101) et une roue arrière (102), chaque roue comportant un moyeu (108) et un dispositif de serrage rapide (1) selon au moins l'une des revendications 1 à 11.

13. Deux-roues (100) selon la revendication 12, dans lequel exactement un dispositif de serrage (3) est prévu pour le montage et le démontage des roues (101, 102) et/ou dans lequel le dispositif de serrage (3) est fixée de manière amovible sur l'unité d'essieu (2) de la roue arrière (102).
